# FASCICULE DE BREVET EUROPEEN

(11) **EP 3 277 932 B1**
(45) Date de publication et mention de la délivrance du brevet: **29.03.2023**
(21) Numéro de dépôt: 16719449.7
(22) Date de dépôt: 01.04.2016
(51) Int. Cl.: F01D 15/10, F04D 29/043, F04D 29/053, H02K 1/27

(54) **ENSEMBLE ROTOR ET TURBOMACHINE À PALIERS À GAZ COMPORTANT UN TEL ENSEMBLE ROTOR**
ROTORANORDNUNG UND TURBINENMOTOR MIT GASLAGERN MIT SOLCH EINER ROTORANORDNUNG
ROTOR ASSEMBLY AND TURBINE ENGINE WITH GAS BEARINGS INCLUDING SUCH A ROTOR ASSEMBLY

(30) Priorité: 01.04.2015 FR 1552789
(43) Date de publication de la demande: 07.02.2018
(73) Titulaire: Liebherr-Aerospace Toulouse SAS, 31200 Toulouse (FR)
(72) Inventeur: BARTHES, Guillaume, 31200 Toulouse (FR); CHAPILLON, Laurent, 82600 Saint-Sardos (FR)
(74) Mandataire: Plasseraud IP
(86) Numéro de dépôt international: PCT/FR2016/050750
(87) Numéro de publication internationale: WO 2016/156757

(56) Documents cités:
- WO-A1-2007/072536
- WO-A1-2013/028521
- WO-A1-2014/003563
- WO-A1-2014/080087

## Description

La présente invention concerne un ensemble rotor et une turbomachine à paliers à gaz comportant un tel ensemble rotor. Une telle machine est destinée à tourner à de très grandes vitesses. Grâce à des vitesses de rotation élevées, il est en effet possible de créer au niveau des paliers du rotor un film de gaz (air) qui vient porter le rotor lui permettant de tourner sans contact avec le stator.

Une turbomachine est un dispositif permettant de récupérer de l'énergie d'un fluide et/ou de fournir de l'énergie à un fluide. On peut avoir par exemple une turbine de détente qui récupère de l'énergie mécanique d'un flux gazeux ou liquide et qui ainsi entraine un système mécanique. Cette énergie peut aussi être utilisée pour être communiquée à un autre fluide, par exemple pour le comprimer. Une turbomachine peut aussi être entrainée par un moteur, par exemple un moteur électrique.

L'invention décrite ci-après a été réalisée dans le domaine des turbomachines utilisées pour l'alimentation en air comprimé d'une pile à combustible dans un véhicule automobile. Cependant, d'autres applications peuvent être envisagées, comme par exemple une utilisation dans un système de conditionnement d'air dans le domaine aéronautique ou le domaine ferroviaire par exemple.

Dans des applications telles celles évoquées plus haut, il convient d'avoir des vitesses de rotation très élevées pour obtenir des rendements importants et ne pas influencer trop négativement le rendement global de la pile à combustible (ou d'un autre système, par exemple système de conditionnement d'air). Les vitesses de rotation à envisager ici sont d'au moins 100.000 tr.min⁻¹. À de telles vitesses de rotation, il convient d'avoir un excellent positionnement des pièces mobiles les unes par rapport aux autres et de pouvoir garantir que ce positionnement relatif n'évolue pas au cours du temps pour ne pas venir créer un balourd. En outre, il convient de prévoir pour les pièces tournantes des paliers sans contact, par exemple à gaz ou aérodynamiques.

Dans les turbomachines connues de l'art antérieur, l'ensemble mobile est composé d'un ensemble de pièces tubulaires positionnées les unes par rapport aux autres et qui sont maintenues dans leur position par un serrage axial assuré par un tirant traversant au moins une partie de l'ensemble des pièces. Le document US2014/0186745 illustre par exemple un tel montage.

Compte tenu des vitesses de rotation de l'ensemble mobile, un équilibrage de cet ensemble doit être réalisé avant la mise en fonction de la turbomachine. Lorsque cet ensemble comporte une roue turbine et une roue compresseur, ces roues sont généralement de diamètres plus grands que celui des paliers supportant l'ensemble. Un démontage doit donc être envisagé pour insérer l'ensemble mobile dans ses paliers après son équilibrage. Il convient de conserver alors un positionnement angulaire et radial précis lors du remontage pour ne pas induire de balourd. Un repérage est alors réalisé sur les pièces constituant l'ensemble mobile pour les remonter dans la même position relative.

Le document WO-2013/028521 divulgue un dispositif d'alimentation en air pour une pile à combustible, qui comprend un arbre, une roue de compresseur qui est agencée dans un carter de compresseur et qui est fixée à l'une des extrémités de l'arbre, une structure de palier qui est agencée dans un boîtier de palier servant à monter l'arbre et un moteur électrique servant à entraîner l'arbre, lequel moteur électrique est agencé dans le boîtier de palier, l'arbre possédant deux parties de portée d'arbre qui sont formées par des composants séparés, et possédant une portion aimantée qui est disposée entre les parties de portée d'arbre et forme un composant séparé et forme le rotor du moteur électrique, les parties de portée de l'arbre et la partie aimantée étant entretoisées l'une par rapport à l'autre, et les parties de portée d'arbre et la partie aimantée étant centrées l'une par rapport à l'autre au moyen d'un dispositif de centrage qui attaque un bord extérieur, les parties de portée d'arbre et la partie aimantée portant dans chaque cas axialement l'une contre l'autre.

Un assemblage tel que présenté ci-dessus a pour inconvénient de présenter un nombre de pièces empilées relativement élevé. De ce fait, l'addition des tolérances de fabrication et d'assemblage entraine des difficultés à atteindre des qualités d'équilibrage nécessaires pour fonctionner à hautes vitesses. En effet, de par cette conception, des moments internes sont créés et limitent les vitesses atteignables.

Il existe également des turbomachines présentant un arbre plein monobloc dont le diamètre reste faible afin de pouvoir atteindre des vitesses de rotation élevées (voir par exemple le document US4986733). Les extrémités de l'arbre sont filetées et reçoivent chacune une roue avec un taraudage correspondant. Le positionnement précis de la roue est assuré par une pièce intermédiaire entre l'arbre et la roue. Grâce à un usinage précis avec des tolérances géométriques et dimensionnelles serrées, il est ainsi possible de ne pas créer de balourd lors du montage de chaque roue.

Le document WO2014/080087 divulgue également un ensemble rotor pour turbomachine de l'art antérieur.

De telles turbomachines ne sont pas conçues pour recevoir un aimant et former ainsi le rotor d'un moteur électrique. Si un aimant est monté autour de l'arbre plein, les vitesses de rotation pouvant être atteintes sont en-dessous des vitesses nécessaires pour l'alimentation en air d'une pile à combustible par exemple. En outre, une telle structure n'est envisageable que pour des diamètres de bout d'arbre faibles. Dès que le diamètre augmente, les efforts centrifuges et la dilatation différentielle entre une roue réalisée en alliage léger et l'arbre réalisé en alliage à hautes caractéristiques mécaniques ne permettent pas de garantir un bon positionnement relatif des pièces en rotation.

La présente invention a alors pour but de fournir une architecture de turbomachine intégrant un moteur électrique permettant de réaliser un bon équilibrage avec une bonne répétabilité de cet équilibrage. Une telle turbomachine sera de préférence compacte et/ou présentera un bon rendement énergétique.

À cet effet, la présente invention propose un ensemble rotor pour turbomachine à paliers à gaz comportant un aimant permanent, un premier arbre présentant au moins un palier destiné à coopérer avec un palier support pour former un palier à gaz et assurer un guidage en rotation du premier arbre ainsi qu'un disque de butée.

Selon la présente invention, l'aimant permanent est un aimant plein monté serré à l'intérieur d'une frette réalisée dans un matériau amagnétique ; la frette forme un ensemble monobloc avec le premier arbre dans le prolongement de celui-ci, et un second arbre présentant au moins un palier destiné à coopérer avec un palier support pour former un palier à gaz et assurer un guidage en rotation du second arbre s'étend à partir de la frette du côté opposé au premier arbre, de manière coaxiale avec le premier arbre de telle sorte que le premier arbre, la frette et le second arbre forment un ensemble monobloc.

Cette nouvelle architecture d'ensemble rotor fournit ainsi un ensemble monobloc qui permet de réaliser un équilibrage hors d'une turbomachine et de ne pas modifier cet équilibrage lorsque l'ensemble est ensuite monté dans la turbomachine. Le matériau amagnétique pour réaliser la frette ainsi que le fait d'avoir un aimant plein permettent une optimisation du moteur électrique dans lequel le rotor viendra prendre place. Il est ainsi possible d'optimiser ce moteur électrique notamment en termes de masse et d'encombrement.

Il est possible de prévoir d'avoir une seule pièce tubulaire, de préférence dans un matériau amagnétique, à l'intérieur de laquelle viendrait prendre place un aimant permanent et qui formerait ainsi la frette, d'un premier côté de celle-ci le premier arbre et de l'autre côté de celle-ci le second arbre. Toutefois, une forme de réalisation préférée prévoit que la frette est soudée d'une part au premier arbre et d'autre part au second arbre. Cette solution permet d'utiliser des matériaux différents au niveau de la frette et des paliers de l'ensemble monobloc et donc de choisir les matériaux utilisés en accord avec la fonction qu'ils ont à remplir.

Afin d'optimiser l'ensemble rotor, il est avantageusement prévu que le premier arbre et le second arbre sont chacun un arbre tubulaire.

Une forme de réalisation d'un ensemble rotor tel que décrit ici prévoit que le premier arbre porte, à l'opposé de la frette, une roue compresseur. Cette roue, entrainée par exemple par le moteur dont l'aimant et la frette forment le rotor, permet alors d'alimenter sous pression de l'air vers une pile à combustible. Plusieurs montages de la roue compresseur peuvent être envisagés (liste non exhaustive) :
- la roue compresseur peut comporter un filetage coopérant avec un taraudage réalisé à une extrémité du premier arbre : cette solution présente un excellent comportement lorsque la roue compresseur est réalisée dans un matériau avec un coefficient de dilatation supérieur à celui du premier arbre et que la température au niveau de la roue compresseur, en fonctionnement, est (relativement) élevée, ou
- le premier arbre peut présenter une pièce taraudée rapportée et montée avec serrage en bout d'arbre à l'intérieur de celui-ci, et la roue compresseur être fixée par vissage sur la pièce taraudée, ou
- le premier arbre présente une pièce taraudée centrée avec un serrage faible en bout d'arbre et vissée à l'intérieur de celui-ci, et la roue compresseur est fixée par vissage sur la pièce taraudée.

Pour ne pas risquer d'introduire un balourd lors d'un démontage et remontage de la roue compresseur sur son premier arbre, il est avantageusement prévu un système de détrompage entre la roue compresseur et le premier arbre.

Dans un ensemble rotor tel que décrit ici, on peut aussi prévoir que le second arbre porte, à l'opposé de la frette, une roue turbine. Cette dernière permet par exemple de récupérer de l'énergie d'un flux gazeux et de l'apporter par exemple à la roue compresseur du premier arbre. On peut également prévoir un système de détrompage entre la roue turbine et le second arbre.

Un ensemble rotor tel que décrit ci-dessus peut présenter également avantageusement les caractéristiques suivantes, prises chacune isolément ou en combinaison :
- le premier arbre et/ou le second arbre présente du côté opposé à la frette un fond dans une face extérieure duquel est réalisé au moins un taraudage,
- la frette est de forme tubulaire cylindrique circulaire,
- le premier arbre et/ou le second arbre sont chacun montés bout à bout avec la frette, et/ou
- le disque de butée ne forme qu'une seule pièce avec le premier arbre ou le second arbre.

La présente invention concerne également une turbomachine motorisée, caractérisée en ce qu'elle comporte :
- un ensemble rotor tel que décrit ci-dessus,
- un stator comportant au moins un ensemble bobiné disposé en vis-à-vis de la frette,

- un premier palier support disposé face au palier du premier arbre pour former un palier à gaz, et
- un second palier support disposé face au palier du second arbre pour former un palier à gaz, et
- une butée bidirectionnelle à gaz placée de part et d'autre du disque de butée de l'ensemble rotor.

Selon une forme de réalisation préférée permettant d'atteindre des vitesses de rotation élevées, cette turbomachine présente par exemple deux paliers à gaz.

Dans une variante de réalisation, cette turbomachine peut présenter une butée bidirectionnelle à gaz placée de part et d'autre d'un disque réalisé sur un arbre de son ensemble rotor.

Des détails et avantages de la présente invention apparaitront mieux de la description qui suit, faite en référence au dessin schématique annexé sur lequel :
La figure 1 est une vue en coupe longitudinale d'un arbre de turbomachine motorisée,
La figure 2 illustre en coupe longitudinale un premier exemple d'ensemble monobloc réalisé avec l'arbre de la figure 1, et
La figure 3 est une vue semblable à la figure 2 pour un second exemple d'ensemble monobloc.

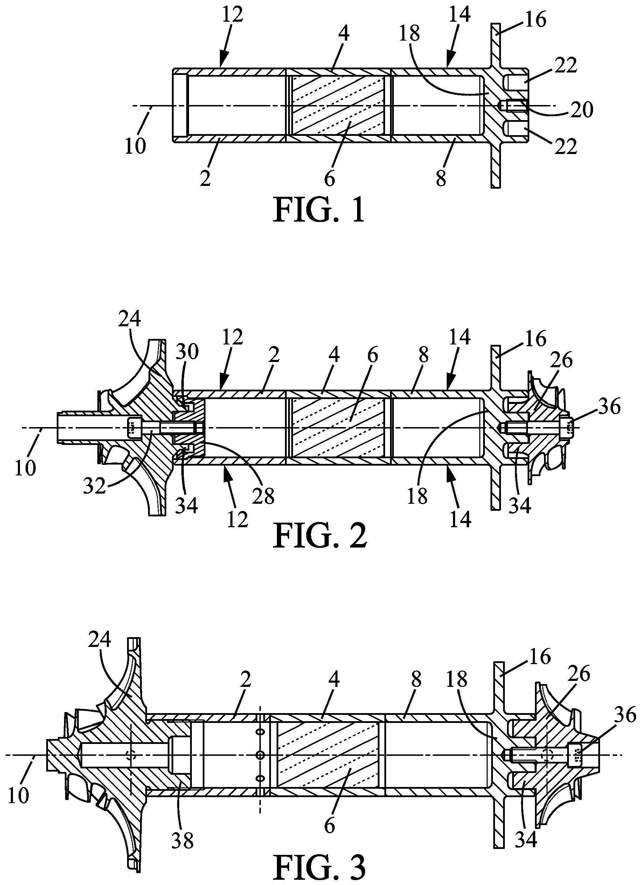

La figure 1 montre un ensemble monobloc formé de quatre pièces distinctes associées de façon indémontable. Cet ensemble comporte ainsi un premier arbre 2, une frette 4, un aimant 6 permanent plein et un second arbre 8.

Le premier arbre 2 est un arbre tubulaire cylindrique d'axe longitudinal 10 réalisé par exemple en acier inoxydable. Sa surface extérieure est usinée au moins au niveau d'une zone 12 de manière à servir de palier dans un palier sans contact de type palier à gaz. L'usinage est bien entendu adapté au type de palier réalisé. Le diamètre de l'arbre au niveau du palier influe sur la capacité de charge de la machine dans laquelle le rotor sera monté. Dans la présente invention, à titre illustratif et non limitatif, on indique que le diamètre des paliers à air est par exemple supérieur ou égal à 25 mm et se situe par exemple dans une fourchette de diamètre de l'ordre de 35 à 50 mm.

Le premier arbre 2 présente une extrémité soudée à la frette 4. Cette dernière présente une forme également tubulaire cylindrique. La frette 4 présente un axe longitudinal et la soudure entre le premier arbre 2 et la frette 4 est réalisée de telle sorte que l'axe longitudinal de la frette 4 soit confondu avec celui du premier arbre 2 pour ne former qu'un seul axe longitudinal 10.

La frette 4 vient enserrer l'aimant 6 si bien que les deux pièces sont solidaires l'une de l'autre. De préférence, le matériau choisi pour réaliser la frette 4 est un matériau amagnétique. Ainsi la frette est par exemple réalisée dans un matériau commercialisé sous la marque déposée Inconel, c'est-à-dire un alliage à base de nickel, de chrome et de fer et contenant également de petites quantités de carbone, de silicium et de manganèse. Un tel alliage présente une grande résistance à la corrosion et des caractéristiques mécaniques intéressantes.

L'aimant 6 est un aimant classique utilisé comme aimant permanent dans un moteur électrique. Il est avantageusement de forme cylindrique pleine. Sa surface extérieure est bien entendu adaptée à la surface intérieure de la frette 4. Le fait d'avoir un aimant plein, sans évidement en son centre, permet de limiter la longueur (mesurée longitudinalement) de l'aimant puisque le couple du moteur correspondant dépend notamment du volume de cet aimant. Il est donc possible de limiter la taille du moteur électrique correspondant.

À son extrémité opposée à celle recevant le premier arbre 2, la frette 4 est soudée au second arbre 8. Ce dernier est par exemple également réalisé en acier inoxydable. Il présente une forme globale cylindrique tubulaire, fermée à son extrémité opposée à la frette 4. Le second arbre 8 est lui aussi soudé sur la frette 4 de telle sorte que son axe longitudinal soit confondu avec l'axe longitudinal 10 du premier arbre 2 et de la frette 4.

Le second arbre 8 présente lui aussi un palier sur sa surface extérieure. Ce palier est de même nature que le palier du premier arbre 2. Il s'agit ainsi d'un palier sans contact, par exemple un palier à gaz ou bien un palier magnétique. Il est réalisé dans une zone 14 du second arbre 8.

On remarque sur les figures la présence d'un disque 16 faisant saillie radialement de la surface extérieure du second arbre 8. Ce disque 16 est disposé entre la zone 14 formant palier et l'extrémité du second arbre 8 opposée à la frette 4. Cette extrémité du second arbre 8 est fermée par un fond 18 dans lequel est réalisé un taraudage 20. Dans la forme de réalisation illustrée, le fond 18 est un fond plein jusqu'à la face orientée vers l'extérieur et présente également dans sa face orientée vers l'extérieur du second arbre 8 et dans laquelle est réalisé le taraudage 20, des logements 22 sous forme de trous longitudinaux. En variante de réalisation, le fond 18 pourrait être par exemple encastré entièrement à l'intérieur du second arbre 8 et présenter un bossage axial centré en saillie vers l'extérieur dans lequel serait réalisé le taraudage 20 pour permettre une fixation par vissage d'une roue.

La figure 2 illustre l'ensemble monobloc de la figure 1 avec une roue compresseur 24 montée à l'extrémité libre (c'est-à-dire opposée à la frette 4) du premier arbre 2 et une roue turbine 26 montée à l'extrémité libre, opposée ici aussi à la frette 4, du second arbre 8.

Dans la forme de réalisation de la figure 2, la roue compresseur 24 est fixée sur un flasque 28 qui vient fermer le premier arbre 2. Le flasque 28 est taraudé en son centre et présente dans la forme de réalisation illustrée autour de son taraudage central une rainure 30 annulaire.

Le flasque 28 peut être monté dans le premier arbre 2 de diverses manières. Selon une première variante, on peut prévoir un montage serré dans le premier arbre 2 en refroidissant par exemple le flasque 28 à l'azote liquide et en chauffant le premier arbre 2. Après montage, les deux pièces sont alors solidaires l'une de l'autre. Une seconde variante prévoit par exemple que le flasque 28 est fileté sur une partie de sa longueur et que le premier arbre 2 est taraudé à son extrémité recevant la roue compresseur 24. La partie non filetée du flasque 28 est par exemple montée avec un serrage léger dans le premier arbre 2 (en chauffant par exemple légèrement le premier arbre 2 avant montage) puis le flasque une fois centré vient prendre sa position finale par vissage. Bien entendu, d'autres formes de réalisation du flasque 28 et d'autres modes de montage peuvent être envisagés.

La roue compresseur 24 est alors fixée sur le flasque 28 à l'aide d'une vis 32 coopérant avec le taraudage central. La roue compresseur 24 présente un épaulement 34 qui vient se centrer sur une surface intérieure de la rainure annulaire 30 lors de la fixation de la roue compresseur 24 sur le premier arbre 2, ou plus précisément sur le flasque 28. Un système de détrompage peut être réalisé avec des pions en bout d'épaulement 34 et les logements correspondants réalisés en fond de la rainure annulaire 30. Il est de la sorte possible de garantir toujours un même positionnement relatif de la roue compresseur 24 avec le premier arbre 2. On peut par exemple prévoir une disposition régulière de logements (et pions) et rajouter un logement (et pion) supplémentaire.

La roue turbine 26 est fixée quant à elle sur le fond 18 du second arbre 8. Il est prévu ici une vis 36 pour coopérer avec le taraudage 20 du fond 18. De même que pour le montage de la roue compresseur 24, on peut prévoir un système de détrompage entre la roue turbine 26 et le second arbre 8 en munissant la roue turbine 26 de pions et un motif de logements correspondant n'acceptant qu'une seule possibilité de montage (par exemple plusieurs pions circulaires et un pion de section carrée avec des logements circulaires correspondant et un seul logement carré pour le pion de section carrée).

La figure 3 illustre une variante de réalisation du montage de la figure 2. On retrouve ici une roue turbine 26 sur le second arbre 8 et une roue compresseur 24 sur le premier arbre 2.

Le montage de la roue turbine 26, comme illustré sur la figure 3, est le même que le montage présenté sur la figure 2 et décrit ci-dessus.

La forme de réalisation choisie sur la figure 3 prévoit un montage vissé de la roue compresseur 24 directement dans le premier arbre 2. À cet effet, la roue compresseur 24 présente un moyeu fileté 38 qui vient coopérer avec un taraudage réalisé dans la paroi intérieure du premier arbre 2 au niveau de son extrémité libre.

Dans cette forme de réalisation, le premier arbre 2 peut être usiné à partir d'un tube filé. Ceci permet de réduire la consommation de matière, le temps d'usinage et le prix de revient.

Dans le cas où la roue compresseur est en alliage léger, notamment à base d'aluminium, et l'arbre en acier, notamment acier inoxydable, les températures élevées des pièces lors du fonctionnement de la turbomachine dans laquelle elles sont montées, entrainent une dilatation différentielle. Le diamètre de la roue compresseur augmente plus vite que celui de l'arbre. Ce montage avantageux permet ainsi d'obtenir un serrage en fonctionnement que l'on n'a pas lorsque la roue est vissée sur l'arbre.

Des variantes de réalisation peuvent bien entendu être envisagées pour réaliser un ensemble rotor tel que décrit ci-dessus.

L'homme du métier comprend que la forme de la roues compresseur et la forme de la roue turbine sont données à titre d'exemples non limitatifs et simplement illustratifs. D'autres formes et d'autres types de montage pour ces roues pourraient être envisagés. On pourrait aussi monter la roue compresseur de la même manière que la roue turbine (et on pourrait aussi monter la roue turbine comme la roue compresseur est montée sur la figure 2 ou bien sur la figure 3).

Au lieu d'avoir un ensemble soudé (premier arbre, frette et second arbre), on pourrait envisager un ensemble monobloc réalisé d'une seule pièce dans un même matériau, de préférence amagnétique.

La position du disque, qui sert de butée axiale, la position de chaque palier, peuvent bien entendu également varier. Toutefois, de préférence, on prévoit de placer le disque du côté de l'ensemble monobloc opposé à celui recevant la roue compresseur.

Un ensemble rotor tel que décrit ci-dessus est adapté pour tourner à des vitesses élevées, même supérieures à 100.000 tr.min⁻¹.

Pour équilibrer l'ensemble rotor, les roues (ou une seule roue) sont montées sur l'ensemble monobloc et le tout est équilibré. Pour ensuite introduire le rotor dans la turbomachine correspondante, il convient de démonter la roue compresseur et/ou la roue turbine qui est (sont) remontée(s) une fois les paliers de l'ensemble monobloc mis en place sur des paliers supports correspondants. Si un système de détrompage est prévu, les roues (la roue) reprennent alors forcément la position relative qu'elles avaient lors de l'équilibrage.

Grâce à l'utilisation de paliers sans contact, aucun lubrifiant n'est nécessaire. De ce fait, l'ensemble décrit plus haut et ses variantes peuvent être utilisés pour alimenter une pile à combustible en air (qui doit être très propre).

L'ensemble rotor tel que décrit ci-dessus comporte moins de pièces que des ensembles comparables de l'art antérieur. Par rapport aux dispositifs de l'art antérieur avec un tirant central pour le maintien de l'empilement des pièces, on remarque aussi qu'il est possible d'avoir un aimant plein, qui est alors globalement moins encombrant.

L'architecture proposée permet de réduire le nombre de pièces empilées, de diminuer les tolérances géométriques et dimensionnelles, et d'obtenir une forme plus simple et plus fiable.

Bien entendu, l'invention ne se limite pas aux formes de réalisation décrites et illustrées sur les figures et aux variantes évoquées. Elle concerne également les variantes à la portée de l'homme du métier dans le cadre des revendications ci-après.

## Revendications

1. Ensemble rotor pour turbomachine à paliers à gaz comportant un aimant (6) permanent, un premier arbre (2) présentant au moins un palier (12) destiné à coopérer avec un palier support pour former un palier à gaz et assurer un guidage en rotation du premier arbre (2) ainsi qu'un disque de butée,
**caractérisé en ce que** l'ensemble rotor comporte en outre une frette (4) et un second arbre (8), **en ce que** l'aimant (6) permanent est un aimant plein monté serré à l'intérieur de la frette (4) réalisée dans un matériau amagnétique,
**en ce que** la frette (4) forme un ensemble monobloc avec le premier arbre (2) dans le prolongement de celui-ci, et
**en ce que** le second arbre (8) présentant au moins un palier (14) destiné à coopérer avec un palier support pour former un palier à gaz et assurer un guidage en rotation du second arbre (8) s'étend à partir de la frette (4) du côté opposé au premier arbre (2), de manière coaxiale avec le premier arbre (2) de telle sorte que le premier arbre (2), la frette (4) et le second arbre (8) forment un ensemble monobloc.

2. Ensemble rotor selon la revendication 1, **caractérisé en ce que** la frette (4) est soudée d'une part au premier arbre (2) et d'autre part au second arbre (8).

3. Ensemble rotor selon l'une des revendications 1 ou 2, **caractérisé en ce que** le premier arbre (2) et le second arbre (8) sont réalisés dans un matériau différent de celui de la frette.

4. Ensemble rotor selon l'une des revendications 1 à 3, **caractérisé en ce que** le premier arbre (2) et le second arbre (8) sont chacun un arbre tubulaire.

5. Ensemble rotor selon l'une des revendications 1 à 4, **caractérisé en ce que** le premier arbre (2) porte, à l'opposé de la frette (4), une roue compresseur (24).

6. Ensemble rotor selon la revendication 5, **caractérisé en ce que** la roue compresseur (24) comporte un filetage coopérant avec un taraudage réalisé à une extrémité du premier arbre (2).

7. Ensemble rotor selon la revendication 5, **caractérisé en ce que** le premier arbre (2) présente une pièce taraudée (28) rapportée et montée avec serrage en bout d'arbre à l'intérieur de celui-ci, et **en ce que** la roue compresseur (24) est fixée par vissage sur la pièce taraudée (28).

8. Ensemble rotor selon la revendication 5, **caractérisé en ce que** le premier arbre (2) présente une pièce taraudée (28) centrée avec un serrage faible en bout d'arbre et vissée à l'intérieur de celui-ci, et **en ce que** la roue compresseur (24) est fixée par vissage sur la pièce taraudée (28).

9. Ensemble rotor selon l'une des revendications 1 à 8, **caractérisé en ce que** le second arbre (8) porte, à l'opposé de la frette (4), une roue turbine (26).

10. Ensemble rotor selon l'une des revendications 1 à 9, **caractérisé en ce que** le premier arbre (2) et/ou le second arbre (8) présente du côté opposé à la frette (4) un fond (18) dans une face extérieure duquel est réalisé au moins un taraudage (20).

11. Ensemble rotor selon l'une des revendications 1 à 10, **caractérisé en ce que** la frette (4) est un tube cylindrique circulaire.

12. Ensemble rotor selon l'une des revendications 1 à 11, **caractérisé en ce que** le premier arbre (2) et/ou le second arbre (8) sont chacun montés bout à bout avec la frette (4).

13. Ensemble rotor selon l'une des revendications 1 à 12, **caractérisé en ce que** le disque de butée ne forme qu'une seule pièce avec le premier arbre (2) ou le second arbre (8).

14. Ensemble rotor selon la revendication 4 et/ou selon la revendication 9, **caractérisé en ce qu'**un dispositif de détrompage est prévu entre le premier arbre (2) et la roue compresseur (24) et/ou entre le second arbre (8) et la roue turbine (26).

15. Turbomachine motorisée, **caractérisée en ce qu'**elle comporte :
- un ensemble rotor selon l'une des revendications 1 à 14,
- un stator comportant au moins un ensemble bobiné disposé en vis-à-vis de la frette,
- un premier palier support disposé face au palier du premier arbre pour former un palier à gaz,
- un second palier support disposé face au palier du second arbre pour former un palier à gaz, et
- une butée bidirectionnelle à gaz placée de part et d'autre du disque (16) de butée de l'ensemble rotor.

## Patentansprüche

1. Rotoranordnung für eine Turbomaschine mit Gaslagern, umfassend einen Permanentmagneten (6), eine erste Welle (2), die wenigstens ein Lager (12) aufweist, das dazu bestimmt ist, mit einem Stützlager zusammenzuwirken, um ein Gaslager zu bilden und eine Drehführung der ersten Welle (2) zu gewährleisten, sowie eine Anschlagscheibe,
**dadurch gekennzeichnet, dass** die Rotoranordnung ferner einen Schrumpfring (4) und eine zweite Welle (8) umfasst, dass der Permanentmagnet (6) ein Vollmagnet ist, der in das Innere des aus einem nichtmagnetischen Material hergestellten Schrumpfrings (4) eingepresst ist,
dass der Schrumpfring (4) eine einstückige Anordnung mit der ersten Welle (2) in deren Verlängerung bildet, und
dass die zweite Welle (8), die wenigstens ein Lager (14) aufweist, das dazu bestimmt ist, mit einem Stützlager zusammenzuwirken, um ein Gaslager zu bilden und eine Drehführung der zweiten Welle (8) zu gewährleisten, sich ausgehend von dem Schrumpfring (4) auf der der ersten Welle (2) gegenüberliegenden Seite koaxial mit der ersten Welle (2) erstreckt, sodass die erste Welle (2), der Schrumpfring (4) und die zweite Welle (8) eine einstückige Anordnung bilden.

2. Rotoranordnung nach Anspruch 1, **dadurch gekennzeichnet, dass** der Schrumpfring (4) einerseits mit der ersten Welle (2) und andererseits mit der zweiten Welle (8) verschweißt ist.

3. Rotoranordnung nach einem der Ansprüche 1 oder 2, **dadurch gekennzeichnet, dass** die erste Welle (2) und die zweite Welle (8) aus einem Material hergestellt sind, das sich von jenem des Schrumpfrings unterscheidet.

4. Rotoranordnung nach einem der Ansprüche 1 bis 3, **dadurch gekennzeichnet, dass** die erste Welle (2) und die zweite Welle (8) jeweils eine rohrförmige Welle sind.

5. Rotoranordnung nach einem der Ansprüche 1 bis 4, **dadurch gekennzeichnet, dass** die erste Welle (2) auf der dem Schrumpfring (4) gegenüberliegenden Seite ein Verdichterrad (24) trägt.

6. Rotoranordnung nach Anspruch 5, **dadurch gekennzeichnet, dass** das Verdichterrad (24) ein Außengewinde umfasst, das mit einem Innengewinde zusammenwirkt, das an einem Ende der ersten Welle (2) gebildet ist.

7. Rotoranordnung nach Anspruch 5, **dadurch gekennzeichnet, dass** die erste Welle (2) ein Innengewindeteil (28) aufweist, das am Ende der Welle in ihrem Inneren angebracht und eingepresst ist, und dass das Verdichterrad (24) durch Verschrauben am Innengewindeteil (28) befestigt ist.

8. Rotoranordnung nach Anspruch 5, **dadurch gekennzeichnet, dass** die erste Welle (2) ein Innengewindeteil (28) aufweist, das mit geringer Pressung am Ende der Welle zentriert ist und in deren Inneres geschraubt ist, und dass das Verdichterrad (24) durch Verschrauben am Innengewindeteil (28) befestigt ist.

9. Rotoranordnung nach einem der Ansprüche 1 bis 8, **dadurch gekennzeichnet, dass** die zweite Welle (8) an der dem Schrumpfring (4) gegenüberliegenden Seite ein Turbinenrad (26) trägt.

10. Rotoranordnung nach einem der Ansprüche 1 bis 9, **dadurch gekennzeichnet, dass** die erste Welle (2) und/oder die zweite Welle (8) an der dem Schrumpfring (4) gegenüberliegenden Seite einen Boden (18) aufweisen, in dessen einer Außenseite wenigstens ein Innengewinde (20) gebildet ist.

11. Rotoranordnung nach einem der Ansprüche 1 bis 10, **dadurch gekennzeichnet, dass** der Schrumpfring (4) ein kreiszylindrisches Rohr ist.

12. Rotoranordnung nach einem der Ansprüche 1 bis 11, **dadurch gekennzeichnet, dass** die erste Welle (2) und/oder die zweite Welle (8) jeweils Ende an Ende mit dem Schrumpfring (4) montiert sind.

13. Rotoranordnung nach einem der Ansprüche 1 bis 12, **dadurch gekennzeichnet, dass** die Anschlagscheibe einstückig mit der ersten Welle (2) oder der zweiten Welle (8) ausgebildet ist.

14. Rotoranordnung nach Anspruch 4 und/oder nach Anspruch 9, **dadurch gekennzeichnet, dass** zwischen der ersten Welle (2) und dem Verdichterrad (24) und/oder zwischen der zweiten Welle (8) und dem Turbinenrad (26) eine Unverwechselbarkeitseinrichtung vorgesehen ist.

15. Motorisierte Turbomaschine, **dadurch gekennzeichnet, dass** sie Folgendes umfasst:
- eine Rotoranordnung nach einem der Ansprüche 1 bis 14,
- einen Stator, der wenigstens eine gewickelte Anordnung aufweist, die dem Schrumpfring gegenüberliegend angeordnet ist,
- ein erstes Stützlager, das dem Lager der ersten Welle zugewandt angeordnet ist, um ein Gaslager zu bilden,
- ein zweites Stützlager, das dem Lager der zweiten Welle zugewandt angeordnet ist, um ein Gaslager zu bilden, und
- ein bidirektionales Gas-Axialdrucklager, das beiderseits der Anschlagscheibe (16) der Rotoranordnung angeordnet ist.

## Claims

1. **A** rotor assembly for a turbine engine with gas bearings including a permanent magnet (6), a first shaft (2) having at least one bearing (12) intended for engaging with a support bearing to form a gas bearing and ensure rotational guidance of the first shaft (2) as well as a thrust disk,
**characterised in that** the rotor assembly also includes a band (4) and a second shaft (8), **in that** the permanent magnet (6) is a solid magnet which is press-fitted inside the band (4) made of a nonmagnetic material,
**in that** the band (4) forms an integral assembly with the first shaft (2) in the extension thereof, and
**in that** the second shaft (8) having at least one bearing (14) intended for engaging with a support bearing to form a gas bearing and ensure rotational guidance of the second shaft (8), extends from the band (4) on the opposite side of the first shaft (2), coaxially with the first shaft (2) such that the first shaft (2), the band (4), and the second shaft (8) form an integral assembly.

2. The rotor assembly according to Claim 1, **characterised in that** the band (4) is welded both on the first shaft (2) and on the second shaft (8).

3. The rotor assembly according to one of Claims 1 or 2, **characterised in that** the first shaft (2) and the second shaft (8) are made of a material different from that of the band.

4. The rotor assembly according to one of Claims 1 to 3, **characterised in that** the first shaft (2) and the second shaft (8) are each a tubular shaft.

5. The rotor assembly according to one of Claims 1 to 4, **characterised in that** the first shaft (2) holds, opposite the band (4), a compressor wheel (24).

6. The rotor assembly according to Claim 5, **characterised in that** the compressor wheel (24) includes a threading engaging with a tapping made at one end of the first shaft (2).

7. The rotor assembly according to Claim 5, **characterised in that** the first shaft (2) has an inserted tapped part (28) press-fitted at one end of the shaft inside thereof, and **in that** the compressor wheel (24) is attached on the tapped part (28) by screwing.

8. The rotor assembly according to Claim 5, **characterised in that** the first shaft (2) has a tapped part (28) which is centred by light pressure at one end of the shaft and screwed inside thereof, and **in that** the compressor wheel (24) is attached on the tapped part (28) by screwing.

9. The rotor assembly according to one of Claims 1 to 8, **characterised in that** the second shaft (8) holds, opposite the band (4), a turbine wheel (26).

10. The rotor assembly according to one of Claims 1 to 9, **characterised in that** the first shaft (2) and/or the second shaft (8) has on the side opposite the band (4) a bottom (18) in an outer surface of which at least one tapping (20) is made.

11. The rotor assembly according to one of Claims 1 to 10, **characterised in that** the band (4) is a circular cylindrical tube.

12. The rotor assembly according to one of Claims 1 to 11, **characterised in that** the first shaft (2) and/or the second shaft (8) are each mounted end-to-end with the band (4).

13. The rotor assembly according to one of Claims 1 to 12, **characterised in that** the thrust disk forms only one piece with the first shaft (2) or the second shaft (8).

14. The rotor assembly according to Claim 4 and/or according to Claim 9, **characterised in that** a keying device is provided between the first shaft (2) and the compressor wheel (24) and/or between the second shaft (8) and the turbine wheel (26).

15. Motorised turbine engine, **characterised in that** it includes:
- a rotor assembly according to one of Claims 1 to 14,
- a stator including at least one wound assembly disposed opposite the band,
- a first support bearing disposed facing the bearing of the first shaft to form a gas bearing,
- a second support bearing disposed facing the bearing of the second shaft to form a gas bearing, and
- a bidirectional gas thrust bearing placed on either side of the thrust disk (16) in the rotor assembly.
